# EUROPÄISCHE PATENTANMELDUNG

(11) **EP 4 360 935 A1**
(43) Veröffentlichungstag der Anmeldung: **01.05.2024**
(21) Anmeldenummer: 23204487.5
(22) Anmeldetag: 18.10.2023
(51) Int. Cl.: B60L 3/04, H01H 47/00

(54) **STEUERVERFAHREN FÜR EIN HV-SCHÜTZ IN EINEM BATTERIESPEICHER UND KONTROLLEINRICHTUNG ZU DESSEN UMSETZUNG**

(30) Priorität: 25.10.2022 DE 102022128275
(71) Anmelder: ElringKlinger AG, 72581 Dettingen/Erms (DE)
(72) Erfinder: WELLER, Lars, 72581 Dettingen/Erms (DE)
(74) Vertreter: Schmidt, Axel

(57) **Zusammenfassung**

Die vorliegende Erfindung betrifft ein Steuerverfahren für ein HV-Schütz (5, 6, 10) und eine Kontrolleinrichtung zu dessen Umsetzung in einem Batteriespeicher, vorzugsweise einem Batteriespeicher eines Elektrofahrzeugs, wobei in dem Batteriespeicher (1) Module (Mod 1,..., Mod 16) über Komponenten der Elektromechanik, in Form von Schützen (5, 6, 10), Sicherungen (F1, F2) und Stromschienen miteinander verschaltet und mit einem Batteriemanagementsystem (BMS) zur Regelung von Ladung und Entladung verbunden sind, wobei zur potentialfreien Trennung an externen elektrischen Anschlüssen (4) jeweils mindestens ein Schütz (5, 6, 10) vorgesehen ist.

Um ein Steuerverfahren und eine Kontrolleinrichtung für einen Hochvolt-Batteriespeicher zu schaffen, durch die PWM-Hochvolt-Schütze so angesteuert werden, dass eine für die Lebensdauer spezifizierte Anzahl an Lastspielen erreicht wird, wird vorgeschlagen, dass die Kontrolleinrichtung dazu ausgebildet ist, unter Verwendung von in einem Plus- und Minus-Pfad des Hochvolt-Batteriespeichers (1) bidirektional verbauten HV-Schützen (5, 6, 10) eine öffnende Ansteuerung eines HV-Schützes (5, 6, 10) zur Unterbrechung eines Stromflusses nur in einer Vorzugsrichtung (V) des jeweiligen Schützes (5, 6, 10) anzusteuern.

## Beschreibung

Die vorliegende Erfindung betrifft ein Steuerverfahren für ein HV-Schütz in einem Batteriespeicher und eine Kontrolleinrichtung zu dessen Umsetzung in einem Batteriespeicher, vorzugsweise einem Hochvolt-Batteriespeicher eines Elektrofahrzeugs.

Neben stationären Anwendungen als Notstromversorgung und Puffer für Leistungsspitzen werden große Batteriespeicher heute regelmäßig auch in reinen Elektrofahrzeugen eingesetzt, also als Ersatz für einen Antrieb durch Verbrennungskraftmaschinen. Diese Batteriespeicher enthalten als geschlossene Einheiten neben Batteriezellen bzw. Batteriemodulen und Elementen zur Verschaltung dieser Module auch eine Vorrichtung zur Kontrolle und Steuerung von Lade- und Entladevorgängen, die meist in einem separaten Gehäuseabschnitt oder in einem davon gänzlich getrennten Gehäuse innerhalb des Batteriespeichers angeordnet ist und oftmals als Hochvoltverteilerbox bezeichnet wird, kurz HVJB. Eine derartige Vorrichtung ist mit Komponenten der Elektronik, z.B. einem Batteriemanagementsystem BMS, Temperatursensoren, einem Strommessshunt, Sicherungen, Stromschienen und einen Vorladewiderstand sowie Komponenten der Elektromechanik verbunden, z.B. in Form von Hochvolt-Schützen und Vorlade-Relais.

In einem Notfall stellen Sicherungen eine allpolige Spannungsfreiheit auf der Hochvolt-Seite bzw. den Polen des Batteriespeichers her. In einem Normalbetrieb des Batteriespeichers kommt diese Aufgabe Hochvolt-Schaltern zu, sog. HV-Schützen. HV-Schütze gibt es in zwei unterschiedlichen Varianten: Ansteuerung und Versorgung über einen sog. Economizer oder über eine Pulsweiten-modulierte Spannung bzw. PWM. Sowohl Schütze mit Economizer-Ansteuerung als auch Schütze mit PWM-Ansteuerung verfügen normalerweise über eine Vorzugsrichtung. Das heißt die Schütze sollten immer in Abhängigkeit einer Stromrichtung geregelt werden. Zwar gibt es auch Schütze ohne Vorzugsrichtung, jedoch sind diese meistens zu groß dimensioniert für Automotiv-Anwendungen. Normalerweise benötigen Schütze Spannungsmessungen vor und hinter dem Schütz, um den aktuellen Status bzw. Schaltzustand des Schützes als "offen" oder "geschlossen" zu bestimmen.

Für HV-Schütze mit PWM-Ansteuerung, welche über AUX-Kontakte verfügen, werden hingegen keine zusätzlichen Spannungsmessungen vor und hinter dem HV-Schütz benötigt. Über die AUX-Kontakte kann der aktuelle Schaltzustand des PWM-Schützes bestimmt werden. PWM-gesteuerte HV-Schütze sind oftmals preiswerter als solche mit Economizer und sie haben zudem auch den Vorteil, dass sie einen geringeren Stromverbrauch haben.

Die Vorzugsrichtung stellt vor allem bei HV-Schützen eine Herausforderung dar. Die Vorzugsrichtung sollte berücksichtig werden, wenn HV-Schütze unter Last geschalten bzw. bei fließendem Strom geöffnet werden. HV-Schütze dürfen unter Strom nur in ihrer Vorzugsrichtung geschalten werden, damit die absolute Anzahl von erlaubten bzw. betriebssicheren Schaltvorgänge bei einwandfreier Funktionalität eines betreffenden HV-Schützes erreicht werden kann. Die erlaubten lastfreien Schaltvorgänge eines HV-Schütz gelten nur wenn der HV-Schütz immer in Vorzugsrichtung geschaltet wird. Für jeden HV-Schütz gibt es auch eine Anzahl an Schaltvorgängen, bei denen er bei einem sehr hohen Strom in Vorzugsrichtung oder bei einem niedrigeren Strom entgegen der Vorzugsrichtung öffnen kann. Diese Werte gelten über die Lebensdauer nur, wenn der Schütz immer in Vorzugsrichtung betrieben wird.

In einem Notfall oder bei einer Fehlfunktion ist ein Öffnen mindestens eines HV-Schützes zur Unterbrechung eines weiteren Stromflusses gegenüber einem Auslösen einer Sicherung zu bevorzugen, insbesondere aufgrund der Reversibilität dieses Vorgangs und eines von Temperatur und Alterung unabhängigen regelmäßig schnelleren Ansprechens eines HV-Schützes im Vergleich zu einer Sicherung.

Es besteht daher für die vorliegende Erfindung die Aufgabe, ein Steuerverfahren für mindestens zwei HV-Schütze und eine Kontrolleinrichtung zu deren Umsetzung in einem Hochvolt-Batteriespeicher zu schaffen, durch die in dem konkreten Fall PWM-Hochvolt-Schütze mit AUX-Kontakten in einem Notfall oder bei einer Fehlfunktion so angesteuert werden, dass eine für die Lebensdauer spezifizierte Anzahl an Lastspielen erreicht wird.

Diese Aufgabe wird erfindungsgemäß durch die Merkmale von Anspruch 1 durch ein Steuerverfahren für ein HV-Schütz gelöst, bei dem unter Verwendung von in einem Plus- und Minus-Pfad des Hochvolt-Batteriespeichers bidirektional verbauten HV-Schützen eine Ansteuerung eines HV-Schützes zum Unterbrechen eines Stromflusses nur dann vorgenommen wird bzw. erfolgt, wenn eine Fließrichtung des Stroms in einer Vorzugsrichtung des betreffenden HV-Schützes liegt.

Ferner wird diese Aufgabe durch eine Kontrolleinrichtung gelöst, bei der HV-Schütze in einem Plus- und Minus-Pfad des HV-Speichers bidirektional verbaut sind und die Kontrolleinrichtung dazu ausgebildet ist, eine öffnende Ansteuerung eines Schützes als Stromunterbrechung eines Stromflusses nur in einer Vorzugsrichtung des betreffenden HV-Schützes anzusteuern. Für die Umsetzung sind beide HV-Schütze im Plus- und Minus-Pfad des HV-Speichers bidirektional verbaut, so dass sowohl beim Lade- als auch beim Entladefall immer einer der HV-Schütze in Vorzugsrichtung verbaut ist.

In jedem Hochvolt-Batteriespeicher ist bei abgeschaltetem Zustand eine potentialfreie Trennung an allen Polen vorgeschrieben. Diese potentialfreie Trennung wird i.d.R. in einer Hochvolt-Verteilerbox durch das Öffnen von HV-Schützen herbeigeführt. Dabei sind Schütze auf eine Lebensdauer ausgelegt, die in einer Anzahl von Schaltvorgängen angegeben wird. Diese Anzahl von Schaltvorgängen erreichen PWM-gesteuerte HV-Schütze jedoch nur dann, wenn sie einen unter Hochspannung fließenden Strom nur bei einem Stromfluss in einer Vorzugsrichtung unterbrechen. Fließt ein Strom entgegen dieser Vorzugsrichtung tritt ein erheblicher Verschleiß an dem HV-Schütz auf, so dass eine maximale Lebensdauer bei weitem nicht erreicht werden kann. Wenn dies nicht überwacht wird, kann es zu einem Verkleben oder Verschweißen von Schütz-Kontakten kommen, wodurch das allpolige Trennen im Zweifelsfall nicht mehr sichergestellt werden kann.

Der Erfindung liegt demnach im Wesentlichen die Erkenntnis zugrunde, dass die Kostenvorteile PWM-gesteuerter HV-Schütze dann bei ausreichender Lebensdauer dieser Bauform von HF-Schützen genützt werden können, wenn auch in einem Notfall oder bei einer Fehlfunktion die Schaltung eines HV-Schützes unter Stromfluss nur in der jeweiligen Vorzugsrichtung stattfindet. Da jeder Batteriespeicher zwei Pole aufweist, die jeweils durch ein HV-Schütz potentialfrei zu schalten sind, müssen also die HV-Schütze an den Polen einander entgegengesetzte Vorzugsrichtungen aufweisen, wobei die HV-Schütze zum Unterbrechen eines Stromflusses durch eine Kontrolleinrichtung in Abhängigkeit einer jeweiligen Stromflussrichtung so angesteuert werden, dass eine Unterbrechung des Stromflusses durch dasjenige HV-Schütz hervorgerufen wird, dessen Vorzugsrichtung in der aktuellen Fließrichtung des Stroms liegt. Erst danach wird gemäß einer vorteilhaften Weiterbildung der Erfindung auch ein zweiter HV-Schütz durch die Kontrolleinrichtung für eine allpolige Potentialfreiheit geöffnet. Beim Öffnen des Stromkreises werden demzufolge alle HV-Schütze, deren Vorzugsrichtung entgegen einer Fließrichtung des aktuellen Stroms orientiert sind, nur nachfolgend bzw. in einem stromlosen Zustand und somit lastfreien Zustand angesteuert.

In einer bevorzugten Ausführungsform der Erfindung zeichnet sich ein Steuerverfahren dadurch aus, dass über die sog. AUX-Kontakte ein jeweiliger Status eines HV-Schützes ausgelesen und überwacht wird. Dadurch kann ein Verschweißen oder Verkleben von internen Kontakten des HV-Schützes als Fehlerfall erkannt werden. Darauf aufbauend wird vorteilhafterweise im Fall eines Verschweißens oder Verklebens von internen Kontakten eines HV-Schützes ein Freirütteln zum Lösen der internen Kontakte des HV-Schützes ausgelöst, jedoch nur in einem stromlosen Zustand des betreffenden HV-Schützes.

Eine Kontrolleinrichtung ist vorteilhaftweise zum Speichern einer jeweiligen Vorzugsrichtung eines jeden HV-Schützes ausgebildet und zudem mit einer Einheit zur Ermittlung einer Richtung des Stromflusses verbunden. Aus dieser Kombination von Informationen heraus ist die Kontrolleinrichtung in jedem Fehlerfall in der Lage, einen Stromfluss durch Öffnen eines geeigneten HV-Schützes sicher zu unterbrechen.

In einer Weiterbildung der Erfindung sind in der Kontrolleinrichtung zu jedem der HV-Schütze eine aktuelle Anzahl von Schaltvorgängen und eine zulässige Anzahl von Schaltvorgängen gespeichert. Ein Verschleiß eines der HV-Schütze ist anhand des Erreichens einer Anzahl zulässiger Schaltvorgänge sicher erkennbar, so dass rechtzeitig ein Austausch im Zuge einer Wartung über die Kontrolleinrichtung veranlasst werden kann.

Schließlich ist die Kontrolleinrichtung vorteilhafter Weise mit AUX-Kontakten der HV-Schütze verbunden und dazu ausgebildet, ein Verschweißen oder Verkleben interner Kontakte eines jeden der HV-Schütze festzustellen. Darauf aufbauend ist die Kontrolleinrichtung vorteilhafter Weise dazu ausgebildet, ein Freirütteln verschweißter oder verklebter interner Kontakte eines der HV-Schütze in einem stromlosen Zustand auszulösen und zu überwachen.

Eine Kontrolleinrichtung mit einem der vorstehend aufgeführten Merkmale ist vorzugsweise in einem Batteriemanagementsystem BMS des Hochvolt-Batteriespeicher-Systems angeordnet bzw. integriert.

Nachfolgend werden weitere Merkmale und Vorteile erfindungsgemäßer Ausführungsformen unter Bezugnahme auf ein Ausführungsbeispiel anhand der Zeichnung näher erläutert. Darin zeigen in schematischer Darstellung:
- Figur 1:: einen Schaltplan eines Batteriespeichers mit einer Kontrolleinrichtung und einer Mehrzahl von elektrischen Speicherzellen und
- Figur 2:: den Schaltplan gemäß Figur 1 mit eingezeichneten Stromflüssen in einem Hochvolt-Betriebszustand.

Über die verschiedenen Abbildungen hinweg werden für gleiche Elemente stets die gleichen Bezugszeichen verwendet. Ohne Beschränkung des Einsatzfeldes wird nachfolgend nur auf einen Einsatz einer erfindungsgemäßen Vorrichtung in einem reinen Elektro-Fahrzeug eingegangen, das selber nicht weiterdargestellt ist. Dem Fachmann ist aber ohne weiteres ersichtlich, dass erfindungsgemäße Verfahren und Vorrichtungen auch sehr vorteilhaft bei stationären Energiespeichern Verwendung finden können, insbesondere in Verbindung mit Windkraft- und/oder Photovoltaik-Anlagen.

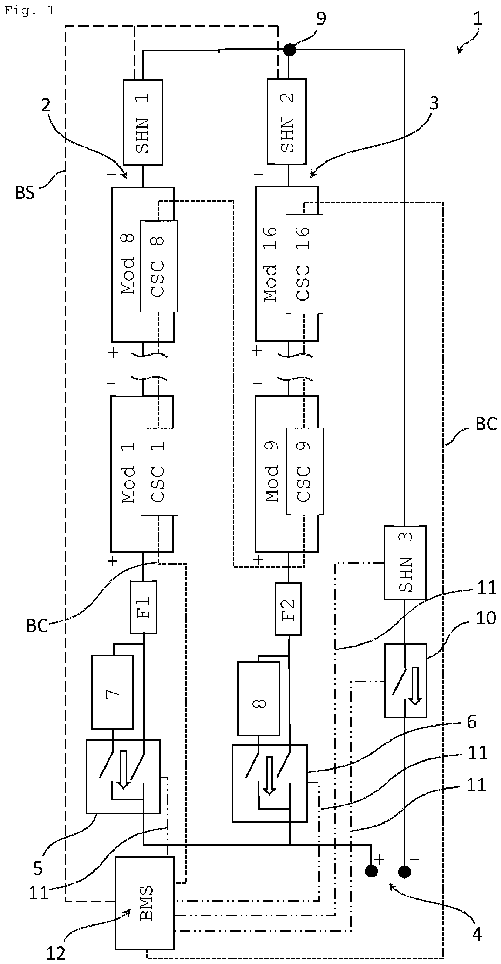

Die Skizze von Figur 1 zeigt einen Schaltplan eines Batteriespeichers 1 mit 16 Modulen Mod 1 bis Mod 16, die jeweils eine nicht weiter dargestellte Mehrzahl von elementaren elektrischen Speicherzellen umfassen. Für diese Speicherzellen ist jeweils ein Zellüberwachungs-Schaltkreis CSC 1 ... CSC 16 mit Sensoren für eine Spannungs- und Temperaturmessung in dem betreffenden Modul zur elektrischen und thermischen Überwachung vorgesehen.

Aus Gründen der Übersichtlichkeit sind von den besagten 16 Modulen in abgekürzter Art und Weise nur die Module Mod 1, Mod 8, Mod 9 und Mod 16 dargestellt worden, die zu zwei Teilsträngen 2, 3 verschaltet sind. Der erste Teilstrang 2 umfasst eine Serien- bzw. Reihenschaltung der Module Mod 1 bis Mod 8, der zweite Teilstrang 3 eine Reihenschaltung der Module Mod 9 bis Mod 16. Der dargestellte Batteriespeicher 1 befindet sich in einem Ruhezustand, d.h. externe elektrische Anschlüsse 4 mit positiver und negativer Polarität sind durch Schütze 5, 6, 10 von den Modulen beider Teilstränge 2, 3 getrennt.

Die Module Mod 1, ..., Mod 16 sind zu zwei Teilsträngen 2, 3 mit gleicher Nennspannung verschaltet. Beide Teilstränge 2 ,3 sind hier identisch als Reihenschaltung aus acht Modulen Mod aufgebaut. An beiden Teilsträngen 2, 3 liegt damit eine Spannung von 400V an. Sie sind an einem elektrisch positiv geladenen Ende jeweils über eine Sicherung F1, F2 mit einem HV-Schütz 5, 6 und jeweils mit einem Vorladerelais 7, 8 verbunden. Dem Fachmann ist bewusst, dass es auch möglich wäre beide Stränge hart parallel zu schalten und nur einen Schütz mit nur einer Vorladung auf der Plus Seite zu verwenden. An einem elektrisch negativ geladenen Ende sind die Teilstränge 2, 3 über Strommesswiderstände SHN1, SHN2 an einem Knoten 9 angeschlossen. Ein negativ geladener externer Anschluss 4 des Batteriespeichers 1 ist über ein HV-Schütz 10 ebenfalls an dem Knoten 9 angeschlossen.

Als Kern der vorliegenden Erfindung umfasst der Batteriespeicher 1 in diesem Ausführungsbeispiel ferner ein Batteriemanagementsystem BMS, das um eine Kontrolleinrichtung 12 erweitert worden ist, und über ein Bussystem BS mit den Strommesswiderständen SHN1, SHN2, sowie über ein separates Bussystem BC mit den Zellüberwachungs-Schaltkreisen CSC 1 ... CSC 16 in den Modulen Mod 1 ... Mod 16 verbunden ist. Ferner verfügt das Batteriemanagementsystem BMS über Steuerleitungen zu den HV-Schützen 5, 6, 10 und zu einem Detektor zur Ermittlung einer Richtung eines Stromflusses I in einem Strommesswiderstand SHN3. Diese Bus-Systeme und Steuerleitungen von den genannten Elementen zu dem Batteriemanagementsystem BMS hin sind jeweils einheitlich als gestrichelte Linien in den Abbildungen der Zeichnung wiedergegeben.

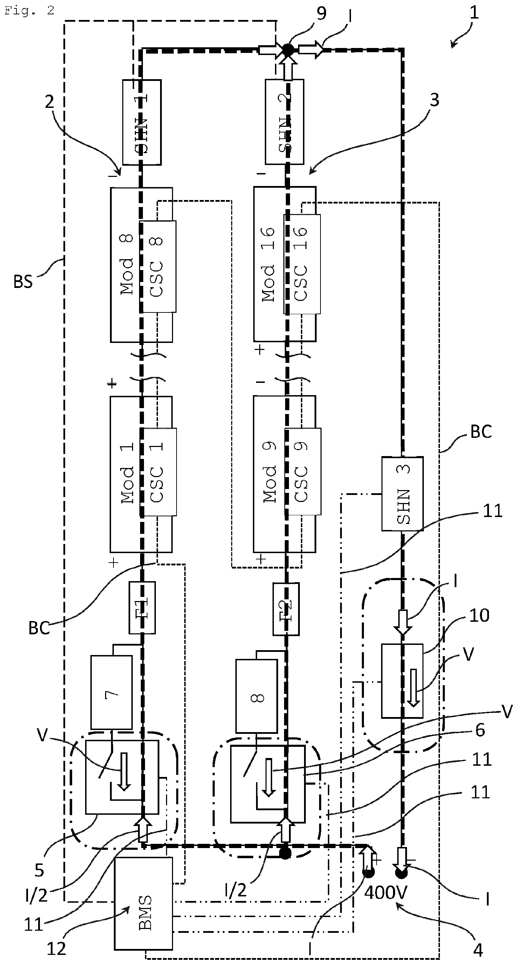

Figur 2 zeigt den Schaltplan gemäß Figur 1 in einem Hochvolt-betriebszustand. Teilströme durch beide baugleiche Teilstränge 2,3 addieren sich an dem Knoten 9 zu einem Gesamtstrom I. Bei einer Spannung von 400V an den äußeren Klemmen 4 erreicht ein derartiger Gesamtstrom I ca. 100A oder mehr. Zur Absicherung des Batteriespeichers 1 an Klemmen 4 sind diese in einem Notfall durch die Schütze 5, 6, 10 potentialfrei zu schalten.

Das Batteriemanagementsystem BMS des HV-Batteriespeichers 1 ist dafür ausgebildet, im Falle eines Fehlers oder einer Störung, wie insbesondere eines Kurzschlusses, einer Überspannung oder einer Unterspannung den fließenden Strom I durch Öffnen der HV-Schütze 5, 6, 10 zu unterbrechen und so unkontrollierbare Situationen in und an dem HV-Batteriespeicher 1 zu verhindern. Auch im Falle eines Überstroms muss der Stromfluss I durch Öffnen der HV-Schütze 5, 6, 10 stets sicher abgeschaltet werden können. Da jedes HV-Schütz 5, 6, 10 nur über eine vorbestimmte Anzahl von Schaltvorgängen sicher betrieben werden kann, ist das Batteriemanagementsystem BMS durch die Kontrolleinrichtung 12 dazu ausgebildet, die Lebensdauer der HV-Schütze 5, 6, 10 zu verfolgen, indem es die Gesamtzahl der Öffnungs-/Schließzyklen der HV-Schütze 5, 6, 10 separat für jedes der HV-Schütze 5, 6, 10 aufzeichnet und speichert. Das Batteriemanagementsystem BMS kennt also eine jeweilige maximale Anzahl der Zyklen, mit denen die HV-Schütze 5, 6, 10 geöffnet werden können und zählt über einen internen Schütz-Zähler zudem, wie oft die einzelnen HV-Schütze 5, 6, 10 während des Betriebs noch geöffnet werden dürfen. Daraus ergibt sich eine Rest-Lebenszeit bis zum Austausch eines jeweiligen HV-Schützes 5, 6, 10. Die maximale Anzahl von Schaltzyklen des HV-Schütz bezieht sich auf das lastfreie Schalten. Das Schalten unter Last wird hier mit einem Gewichtungsfaktor in Abhängigkeit der beim Öffnen anliegenden Last berücksichtigt.

Unter normalen Betriebsbedingungen werden HV-Schütze als elektro-mechanische Leistungsschalter nur dann geöffnet, wenn der Stromfluss unter einem definierten Nennwert liegt, z.B. unter 5A. Wird ein HV-Schütz unter höheren Strom-Belastungen geöffnet, altert das betreffende HV-Schütz stark und eine vorgegebene Anzahl von Schaltvorgängen kann nicht mehr erreicht werden. Durch Pulsweiten-modulierte Signale bzw. PWM angesteuerte HV-Schütze verfügen zudem über ein Vorzugsrichtung V und dürfen unter Strom nur in dieser Vorzugsrichtung geschaltet werden, damit die absolute Anzahl von erlaubten Schaltvorgänge erreicht werden kann. In dem Falle, dass ein Schütz verschlissen ist wird das Schließen zumindest dieses HV-Schützes untersagt bzw. durch die Kontrolleinrichtung 12 innerhalb des Batteriemanagementsystems BMS verhindert.

Der Kontrolleinrichtung 12 innerhalb des Batteriemanagementsystems BMS sind die Vorzugsrichtungen V der jeweiligen HV-Schütze 5, 6, 10 bekannt, wobei HV-Schütze 5, 6, 10 in einem Plus- und Minus-Pfad des HV-Batteriespeichers 1 bidirektional verbaut sind. Vor einem Öffnen eines HV-Schützes 5, 6, 10 bei fließendem Strom I wird zunächst eine Fließrichtung eines aktuellen Stromflusses I über die Einheit 13 geprüft. Damit ist in der Kontrolleinrichtung 12 bekannt, bei welchen die HV-Schütze 5, 6, 10 der aktuelle Strom I in der Vorzugsrichtung V oder entgegen der Vorzugsrichtung V fließt. Die HV-Schütze 5, 6, 10 werden also in Abhängigkeit einer jeweiligen Vorzugsrichtung V und einer Richtung eines aktuellen Stromflusses I geöffnet. Bei einer Abschaltung bzw. Unterbrechung eines Stromflusses I muss zuerst dasjenige HV-Schütz mit einer Vorzugsrichtung V in Richtung des Stroms I und dann erst ein Schütz mit einer Vorzugsrichtung V entgegen der Stromrichtung geöffnet werden, um einen Verschleiß des HV-Schützes mit einer Vorzugsrichtung V gegen der vorliegenden Flussrichtung des Stroms I zu vermeiden. Nach Figur 2 wird also zuerst das HV-Schütz 10 geöffnet. Erst nachfolgend werden bei erfolgter Unterbrechung des Stromflusses auch diejenigen HV-Schütze geöffnet, deren Vorzugsrichtung V entgegen der Flussrichtung des Stroms I lag, gemäß Figur 2 also die HV-Schütze 5, 6, um damit eine allpolige Potentialfreiheit an den Kontakten des Anschlusses 4 des Batteriespeichers 1 sicher herzustellen.

Ein wichtiger Punkt bei der Umsetzung des vorstehend skizzierten Verfahrens besteht darin, dass die Kontrolleinrichtung 12 innerhalb des Batteriemanagementsystems BMS verschweißte HV-Schütze erkennt, um einen unsicheren Betrieb zu verhindern. Dazu wird über sog. AUX-Kontakte ein jeweiliger Status eines HV-Schützes 5, 6, 10 ausgelesen und überwacht. So ist auch ein Verschweißen von Kontakten eines HV-Schützes über die AUX Kontakte detektierbar. Sollte der Fall eintreten, dass ein HV-Schütz an seinen internen Schaltkontakten lediglich verklebt ist, so kann dieser HV-Schütz freigerüttelt werden. Ein Freirütteln darf nur stattfinden, wenn der andere HV-Schütz geöffnet ist und der HV-Batteriespeicher 1 über seinen Kontakt 4 somit nicht angeschlossen bzw. stromlos ist.

Durch die vorliegende Erfindung wird ein großer Nachteil bei Einsatz von PWM-gesteuerten HV-Schützen in einem HV-Batteriespeicher 1 beseitigt, der in Form einer Vorzugsrichtung V eine betriebssichere Lebensdauer bzw. Standzeit PWM-gesteuerter HV-Schütze stark reduzieren kann. Durch Einführung einer Kontrolleinrichtung 12 innerhalb des Batteriemanagementsystems BMS wird eine Vorzugsrichtung V eines jeden HV-Schützes nun mit einer Richtung eines aktuellen oder durch Anschaltung geplanten Stromflusses verglichen. Ein Schalten eines HV-Schützes zur Stromunterbrechung wird nur bei Übereinstimmung von Vorzugsrichtung V und Stromflussrichtung vor einem Schalten der übrigen HV-Schütze durchgeführt. Bei einem Einschalten eines Stromflusses wird in umgekehrter Richtung verfahren. Eine HV-Schützsteuerung für ein PWM HV-Schütze erfolgt also stets unter Berücksichtigung dessen Vorzugsrichtung und einer Stromrichtung, damit nur in einer Vorzugsrichtung V unter Last bzw. bei Stromfluss geschaltet wird.

Ein HV-Schütz wird bei der vorstehend dargestellten Methodik nur dann gegen die Vorzugsrichtung geschaltet, wenn der HV-Schütz, welcher in Vorzugsrichtung verbaut ist, bereits geöffnet ist und der HV-Schütz gegen die Vorzugsrichtung somit lastfrei geschaltet werden kann. Sonst muss auch dann gegen die Vorzugsrichtung geschaltet werden, wenn der in Vorzugsrichtung von Strom durchflossene HV-Schütz bei dem ÖffnungsVorgang verklebt sind und sich nicht mehr öffnen lässt. In diesem Fall wird versucht, mit dem Schütz gegen die Vorzugsrichtung den Stromkreis zu trennen, um einen sicheren Zustand darzustellen.

Damit wird ohne zusätzlichen Bauraum bei geringen Mehrkosten für Bauteile und Material und prinzipiell möglichen Kosteneinsparung durch Einsatz preiswerterer und im Betrieb sparsamerer HV-Schütze eine deutlich verbesserte Betriebssicherheit realisiert, wie anhand des vorstehend beschriebenen Ausführungsbeispiels dargestellt.

### Bezugszeichenliste

- 1: Batteriespeicher
- 2: erster Teilstrang
- 3: zweiter Teilstrang
- 4: externe elektrische Anschlüsse
- 5: Schütz
- 6: Schütz
- 7: Vorladerelais
- 8: Vorladerelais
- 9: Knoten
- 10: Schütz
- 11: Signal-Zweig
- 12: Kontrolleinrichtung

- BC: Bus der Zellüberwachungs-Schaltkreise CSC 1 ... CSC 16
- BS: Bus der Strommesswiderstände
- BMS: Batteriemanagementsystem
- CSC: Zellüberwachungs-Schaltkreis bzw. Cell Sensor Circuit
- F1: Sicherung
- F2: Sicherung
- I: Gesamt-Stromfluss an den Kontakten der externen Anschlusse 4
- Mod: Modul
- SHN1: Strommesswiderstand / Shunt
- SHN2: Strommesswiderstand / Shunt
- SHN3: Strommesswiderstand / Shunt mit Detektor zur Ermittlung einer Richtung des Stromflusses I
- V: Vorzugsrichtung eines Schützes

## Patentansprüche

1. Steuerverfahren für ein HV-Schütz in einen Batteriespeicher, vorzugsweise einem Hochvolt-Batteriespeicher eines Elektrofahrzeugs,
**dadurch gekennzeichnet, dass**
unter Verwendung von in einem Plus- und Minus-Pfad des Hochvolt-Batteriespeichers (1) bidirektional verbauten HV-Schützen (5, 6, 10) eine öffnende Ansteuerung eines HV-Schützes (5, 6, 10) zur Unterbrechung eines Stromflusses (I) nur in einer Vorzugsrichtung (V) des jeweiligen HV-Schützes (5, 6, 10) vorgenommen wird.

2. Steuerverfahren nach dem vorhergehenden Anspruch, **dadurch gekennzeichnet, dass** eine öffnende Ansteuerung eines HV-Schützes (5, 6, 10) bei einem bestehenden Stromfluss (I) entgegen einer Vorzugsrichtung (V) des jeweiligen HV-Schützes (5, 6, 10) nur in einem stromlosen Zustand dieses HV-Schützes (5, 6, 10) vorgenommen wird.

3. Steuerverfahren nach einem der beiden vorhergehenden Ansprüche, **dadurch gekennzeichnet, dass** über sog. AUX-Kontakte ein jeweiliger Status eines HV-Schützes (5, 6, 10) ausgelesen und überwacht wird, um ein Verschweißen oder Verkleben von internen Kontakten des HV-Schützes (5, 6, 10) zu erkennen.

4. Steuerverfahren nach dem vorhergehenden Anspruch, **dadurch gekennzeichnet, dass** im Fall eines Verschweißen oder Verkleben von internen Kontakten des HV-Schützes (5, 6, 10) ein Freirütteln zum Lösen der internen Kontakte des HV-Schützes (5, 6, 10) nur in einem stromlosen Zustand ausgelöst wird.

5. Kontrolleinrichtung (12) zur Umsetzung eines Steuerverfahren für HV-Schütze nach einem der vorstehenden Ansprüche in einem Batteriespeicher (1), vorzugsweise für einen Batteriespeicher eines Elektrofahrzeugs, wobei in dem Batteriespeicher (1) Module (Mod 1,..., Mod 16) über Komponenten der Elektromechanik, in Form von HV-Schützen (5, 6, 10), Sicherungen (F1, F2) und Stromschienen miteinander verschaltet und mit einem Batteriemanagementsystem (BMS) zur Regelung von Ladung und Entladung verbunden sind, wobei zur potentialfreien Trennung an externen elektrischen Anschlüssen (4) jeweils mindestens ein HV-Schütz (5, 6, 10) vorgesehen ist,
**dadurch gekennzeichnet, dass**
HV-Schütze (5, 6, 10) in einem Plus- und Minus-Pfad des HV-Speichers bidirektional verbaut sind und die Kontrolleinrichtung (12) dazu ausgebildet ist, eine öffnende oder schließende Ansteuerung eines HV-Schützes (5, 6, 10) zur Unterbrechung oder Herstellung eines Stromflusses nur in einer Vorzugsrichtung (V) des jeweiligen HV-Schützes (5, 6, 10) anzusteuern.

6. Kontrolleinrichtung (12) nach dem vorhergehenden Anspruch, **dadurch gekennzeichnet, dass** in der Kontrolleinrichtung (12) eine jeweilige Vorzugsrichtung (V) eines jeden HV-Schützes (5, 6, 10) gespeichert ist und die Kontrolleinrichtung (12) mit einer Einheit (13) zur Ermittlung einer Richtung des Stromflusses (I) verbunden ist, wobei HV-Schütze (5, 6, 10) in einem Plus- und Minus-Pfad des HV-Speichers (1) bidirektional verbaut sind.

7. Kontrolleinrichtung (12) nach dem vorhergehenden Anspruch, **dadurch gekennzeichnet, dass** in der Kontrolleinrichtung (12) zu jedem der HV-Schütze (5, 6, 10) eine aktuelle Anzahl und eine zulässige Anzahl von Schaltvorgängen gespeichert sind.

8. Kontrolleinrichtung (12) nach einem der drei vorhergehenden Ansprüche, **dadurch gekennzeichnet, dass** die Kontrolleinrichtung (12) mit AUX-Kontakten der HV-Schütze (5, 6, 10) verbunden und dazu ausgebildet ist, ein Verschweißen oder Verkleben interner Kontakte eines jeden der HV-Schütze (5, 6, 10) festzustellen.

9. Kontrolleinrichtung (12) nach dem vorhergehenden Anspruch, **dadurch gekennzeichnet, dass** die Kontrolleinrichtung (12) dazu ausgebildet ist, ein Freirütteln verschweißter oder verklebter interner Kontakte eines der HV-Schütze (5, 6, 10) in einem stromlosen Zustand auszulösen und zu überwachen.

10. Kontrolleinrichtung (12) nach einem der fünf vorhergehenden Ansprüche, **dadurch gekennzeichnet, dass** die Kontrolleinrichtung (12) in einem Batteriemanagementsystem (BMS) des Hochvolt-Batteriespeichers (1) angeordnet bzw. integriert ist.
